(19) Europäisches Patentamt
European Patent Office
Office européen des brevets

(11) Numero de publication: **0 142 823**
**A2**

(12) # DEMANDE DE BREVET EUROPEEN

(21) Numéro de dépôt: **84113791.2**

(22) Date de dépôt: **15.11.84**

(51) Int. Cl.⁴: **G 01 B 11/06**

(30) Priorite: **21.11.83 FR 8318486**

(43) Date de publication de la demande: **29.05.85 Bulletin 85/22**

(84) Etats contractants désignés: **AT BE CH DE FR GB IT LI LU NL SE**

(71) Demandeur: **COMPAGNIE INDUSTRIELLE DES TELECOMMUNICATIONS CIT-ALCATEL S.A. dite:**
**12, rue de la Baume**
**F-75008 Paris(FR)**

(72) Inventeur: **Canteloup, Jean**
**18, allée des Pommiers**
**F-91310 Montlhery(FR)**

(74) Mandataire: **Weinmiller, Jürgen et al,**
**Zeppelinstrasse 63**
**D-8000 München 80(DE)**

(54) **Dispositif de contrôle de l'épaisseur d'une couche mince.**

(57) Dispositif de contrôle d'épaisseur d'une couche mince 53B) faiblement absorbante sur un substrat (31) au moins partiellement réfléchissant, placé dans une enceinte (1) à vide fermée par un hublot (7), caractérisé en ce qu'il comprend.

- une source laser (8) polarisée,
- un cube (13) à polarisation, disposé sur le trajet du faisceau laser, comprenant deux prismes (13A, 13B) à angle droit assemblés par leurs faces hypothénuse au moyen d'un film diélectrique (13C), ledit cube étant orienté pour que le faisceau laser incident ait un angle d'incidence de quarante cinq degrés avec ledit film, ledit cube laissant passer une première partie du faisceau incident vers un premier convertisseur opto–électronique (15A) linéaire fournissant un premier signal électrique ($I_{oe}$), ledit cube réfléchissant une seconde partie du faisceau incident qui traverse une lame quart d'onde (7, 7A), se réfléchit sur la couche, puis retraverse le cube sans déviation et est envoyé sur un second convertisseur (15B) opto–électronique fournissant un second signal électrique ($I_e$),
- un moyen pour effectuer le rapport du second signal électique au premier signal électrique,
- un moyen pour corriger la lumière parasite,
- un moyen pour obtenir la dérivée dudit rapport,
- un moyen pour étalonner la tête de mesure,
- un moyen pour fournir un signal lorsque ladite dérivée est restée comprise, pendant un temps donné, entre deux valeurs données encadrant une valeur de consigne représentative de l'épaisseur désirée.

FIG.1

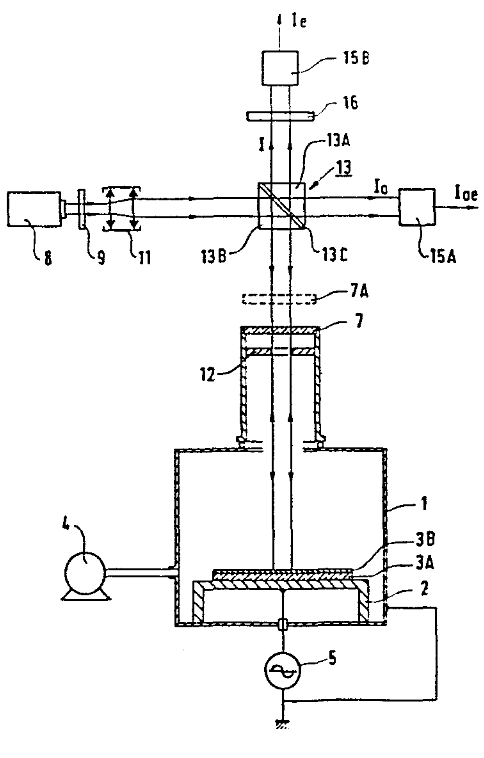


EP 0 142 823 A2

Croydon Printing Company Ltd

Dispositif de contrôle de l'épaisseur d'une couche mince

La présente invention concerne un dispositif opto-électronique pour contrôler l'épaisseur d'une couche mince au cours d'un processus de gravure ou de dépôt.

Dans le document de brevet FR-A-82 14034, on décrit une tête électronique comprenant une source laser, un expanseur et un séparateur de lumière constitué d'une lame semi-réfléchissante à faces parallèles, disposée à 45 degrés sur le faisceau laser expansé.

On obtient ainsi un faisceau réfléchi envoyé sur une cellule photo-électrique de référence et un faisceau transmis, qui après réflexion sur la couche mince étudiée et nouvelle réflexion sur le séparateur, atteint une cellule photo-électrique de mesure.

Un tel dispositif présente l'inconvénient de n'utiliser qu'une fraction de la lumière émise par la source laser. En effet, la moitié seulement de la lumière laser est transmise à travers la lame et la moitié seulement du faisceau réfléchi sur la couche est réfléchi vers la cellule de mesure. Un quart seulement de la lumière émise par le laser est utilisé pour la mesure.

Un but de la présente invention est de réaliser un dispositif à laser permettant d'utiliser la quasi totalité de la lumière émise par le laser, augmentant ainsi la sensibilité du dispositif.

Un autre but de l'invention est d'associer deux dispositifs du type ci-dessus pour pouvoir réaliser un dispositif de contrôle d'épaisseur de couche minces à deux postes.

L'invention a pour objet un dispositif de contrôle d'épaisseur d'une couche mince faiblement absorbante sur un substrat au moins partiellement réfléchissant, placé dans une enceinte à vide fermée par un hublot, caractérisé en ce qu'il comprend

- une source laser polarisée,
- un cube à polarisation, disposé sur le trajet du faisceau laser, comprenant deux prismes à angle droit assemblés par leurs faces hypothénuse au moyen d'un film diélectrique, ledit cube étant orienté pour que le faisceau laser incident ait un angle d'incidence de quarante cinq degrés avec ledit film, ledit cube laissant passer une première partie du faisceau incident vers un premier convertisseur opto-électronique

linéaire fournissant un premier signal électrique, ledit cube réfléchissant une seconde partie du faisceau incident qui traverse une lame quart d'onde, se réfléchit sur la couche, puis retraverse le cube sans déviation et est envoyé sur un second convertisseur opto-électronique fournissant un second signal électrique proportionnel au flux lumineux reçu,

- un moyen pour effectuer le rapport du second signal électrique au premier signal électrique,
- un moyen pour compenser la lumière parasite,
- un moyen pour obtenir la dérivée dudit rapport,
- un moyen pour fournir un signal lorsque ladite dérivée est restée comprise, pendant un temps donné, entre deux valeurs données encadrant une valeur de consigne représentative de l'épaisseur désirée.

Avantageusement, la lame quart d'onde constitue le hublot de ladite enceinte.

Un calibre optique placé sous ce dernier hublot rend l'ensemble photométrique.

L'invention a également pour objet un dispositif pour le contrôle simultané de deux couches minces disposées sur chacune un support, placé dans une enceinte, caractérisé en ce qu'il comprend

- un laser polarisé et, sur le trajet du faisceau laser, successivement, une lame à faces parallèles orientée à 45 degrés, un cube à polarisation comprenant deux prismes à angle droit assemblés par leurs faces hypothénuses au moyen d'un film diélectrique, le cube étant orienté pour que le faisceau laser ait un angle d'incidence de 45 degrés avec ledit film, et un premier convertisseur opto-électronique linéaire fournissant un premier signal électrique, la première couche mince étant disposé sur le trajet du faisceau réfléchi par la lame, un second convertisseur étant disposé sur le trajet du faisceau réfléchi par la première couche et fournissant un second signal électrique, la seconde couche mince étant disposée sur le trajet du faisceau réfléchi par le cube avec interposition d'une lame quart d'onde, un troisième convertisseur étant disposé sur le trajet du faisceau réfléchi par la seconde couche et fournissant un troisième signal électrique,
- des moyens pour effectuer les rapports des second et troisième signaux au premier signal

- des moyens pour obtenir les dérivées desdits rapports
- et des moyens pour fournir un signal lorsque l'une ou l'autre des dérivées est restée comprise, pendant un temps donné, entre deux valeurs encadrant la valeur de consigne représentative de l'épaisseur désirée de la couche correspondante.

Avantageusement, l'une au moins des lames quart d'onde constitue un hublot de l'enceinte.

L'invention sera bien comprise par la description ci-après de deux dispositifs de contrôle d'épaisseur de couches minces selon l'invention.

La figure 1 représente un dispositif de contrôle d'épaisseur de couche mince.

La figure 2 représente un dispositif de contrôle simultané de l'épaisseur de deux couches minces.

Dans la figure 1, la référence 1 représente une enceinte dans laquelle est placée, sur un support 2, une pièce à graver qui comprend un substrat 3A et une couche 3B. Un générateur haute fréquence 5 établit entre le support 2 et la paroi de l'enceinte (ou en variante une électrode), une tension génératrice d'un plasma. L'enceinte comporte un hublot 7. Un groupe de pompage 4 assure un vide convenable dans l'enceinte.

Une source de lumière monochromatique 8, tel qu'un laser hélium-néon, émet un faisceau de lumière. Si le dispositif laser n'émet pas une lumière polarisée, on interpose un polariseur 9 sur le trajet du faisceau lumineux ; la largeur du faisceau est réglée au moyen d'un dispositif optique expanseur 11.

Un cube à polarisation 13, constitué de deux prismes à angle droit 13A et 13B collés par leur face hypothénuse par un film diélectrique 13C, est placé sur le faisceau incident de telle manière que l'angle d'incidence sur le film 13C soit égal à 45 degrés.

De la sorte, 98% du faisceau environ est réfléchi vers la couche 3B, 2% traversant le cube pour atteindre un convertisseur opto-électronique 15A qui fournit un signal électrique $I_{oe}$.

Le faisceau réfléchi est envoyé sur la couche 3B à travers le hublot 7. Avantageusement le hublot est formé d'une lame quart d'onde. Si ce n'est pas le cas, on interpose une lame quart d'onde 7A entre le

hublot 7 et le cube 13.

Le faisceau réfléchi par la couche 3B retraverse le cube et, pratiquement sans perte, atteint un second convertisseur opto- électronique linéaire 15B, qui fournit un signal électrique $I_e$.

Les convertisseurs opto-électroniques linéaires 15A et 15B sont de préférence des diodes photo-conductrices ou photo-voltaïques.

Soient $I_o$ et I les intensités des faisceaux lumineux arrivent sur les convertisseurs 15A et 15B ; ces intensitées sont converties en signaux électriques proportionnels $I_{oe}$ et $I_e$.

On sait, en particulier par le document FR-A-82 1414034, utiliser ces signaux pour obtenir un signal de fin de gravure.

Pour cela rappelons qu'on établit le rapport $I_e/I_{oe}$ (après éventuellement filtrage et amplification), puis la dérivée $D = d(I_e/I_{oe})/dt$.

Dans un mode d'utilisation on compare la valeur du signal D à deux valeurs et lorsque D reste compris entre ces deux valeurs pendant un temps donné (7 à 8 secondes par exemple), c'est que la couche à graver à complètement disparue.

Grâce au cube à polarisation, la sensibilité du dispositif peut être augmentée par un facteur multiplicatif légèrement inférieur à 4.

On peut régler aisément la sensibilité de l'appareil en plaçant sur le trajet du faisceau qui atteint le convertisseur 15B, un polariseur 16 réglable. Le dispositif est étalonné au moyen d'un calibre 12 placé sous ce hublot.

La figure 2 illustre un dispositif qui permet de contrôler simultanément la gravure de deux couches, avec un seul générateur laser.

Deux couches 31A et 32A, et leurs substrats respectifs, 31B et 32B sont disposés sur un support 20 disposé dans une enceinte à vide 10 comportant deux hublots 70 et 71. Un groupe de pompage 40 assure un vide convenable dans l'enceinte ; un générateur 50 établit la tension nécessaire à la création du plasma.

Un laser 80, associé à un expanseur 110 et éventuellement un polariseur 90, dirige un faisceau sur une lame à faces parallèles 200, alignée avec un cube à polarisation 130.

Le faisceau laser est partiellement réfléchi vers la couche 31A ; après réflexion sur la couche 31A, la lumière retraverse la lame 200 et

atteint un convertisseur opto-électronique 151 qui émet un signal $I_{e1}$. La partie du faisceau qui a traversé la lame 200 sans déviation arrive sur le cube 130 où une partie traverse vers un convertisseur opto-électronique 150 (signal $I_{oe}$) et où une autre partie est réfléchie vers la couche 32A, puis réfléchie vers un convertisseur opto-électronique 152 (signal $I_{e2}$).

Le hublot 72 est une lame quart d'onde. En variante on interpose une lame quart d'onde 72A sur le trajet de la lumière.

Un réglage de l'intensité du faisceau arrivant sur le convertisseur 152 peut être obtenu au moyen d'un polariseur variable 160.

Les signaux $I_{oe}$, $I_{e1}$ $I_{e2}$ sont traités électroniquement comme indiqué plus haut.

Le dispositif qui vient d'être décrit permet, avec une sensibilité égale à celle de l'art antérieur, de traiter simultanément deux couches avec un seul laser et une seule enceinte à plasma.

Une allonge (expanseur ou réducteur afocal), réglable ou non, 210, peut être disposée entre la lame 200 et le cube 130 pour faciliter le réglage des intensités des faisceaux lumineux.

Des calibres 121, 122 placés auprès des hublots permettent également les étalonnages des intensités lumineuses.

L'invention trouve application dans le domaine de la fabrication des circuits électroniques.

REVENDICATIONS

1/ Dispositif de contrôle d'épaisseur d'une couche mince (3B) faiblement absorbante sur un substrat (3A) au moins partiellement réfléchissant, placé dans une enceinte (1) à vide fermée par un hublot (7), caractérisé en ce qu'il comprend

- une source laser (8) polarisée,
- un cube (13) à polarisation, disposé sur le trajet du faisceau laser, comprenant deux prismes (13A, 13B) à angle droit assemblés par leurs faces hypothénuse au moyen d'un film diélectrique (13C), ledit cube étant orienté pour que le faisceau laser incident ait un angle d'incidence de quarante cinq degrés avec ledit film, ledit cube laissant passer une première partie du faisceau incident vers un premier convertisseur opto-électronique (15A) linéaire fournissant un premier signal électrique ($I_{oe}$), ledit cube réfléchissant une seconde partie du faisceau incident qui traverse une lame quart d'onde (7, 7A), se réfléchit sur la couche, puis retraverse le cube sans déviation et est envoyé sur un second convertisseur (15B) opto-électronique fournissant un second signal électrique ($I_e$),
- un moyen pour effectuer le rapport du second signal électique au premier signal électrique,
- un moyen pour corriger la lumière parasite,
- un moyen pour obtenir la dérivée dudit rapport,
- un moyen pour étalonner la tête de mesure,
- un moyen pour fournir un signal lorsque ladite dérivée est restée comprise, pendant un temps donné, entre deux valeurs données encadrant une valeur de consigne représentative de l'épaisseur désirée.

2/ Dispositif selon la revendication 1, caractérisé en ce que la lame quart d'onde constitue le hublot (7) de ladite enceinte.

3/ Dispositif selon l'une des revendications 1 ou 2 , caractérisé en ce qu'un polariseur (16) est disposé sur le trajet lumineux entre le cube (13) et le second convertisseur (15B).

4/ Dispositif pour le contrôle simultané de deux couches minces (31A, 32A) disposées chacune sur un substrat au moins partiellement réfléchissant, placé dans une enceinte (10) à vide fermée par des hublots (71, 72), caractérisé en ce qu'il comprend

- une sonde laser (80) polarisée et, sur le trajet du faisceau laser, successivement, une lame à faces parallèles (200) orientée à 45 degrés, un cube (130) à polarisation comprenant deux prismes à angle droit assemblés par leurs faces hypothénuses au moyen d'un film diélectrique, le cube étant orienté pour que le faisceau laser ait un angle d'incidence de 45 degrés avec ledit film, et un premier convertisseur opto-électronique linéaire (150) fournissant un premier signal électrique ($I_{oe}$), la première couche mince (31A) étant disposé sur le trajet du faisceau réfléchi par la lame, un second convertisseur (151) étant disposé sur le trajet du faisceau réfléchi par la première couche et fournissant un second signal électrique ($I_{e1}$), la seconde couche mince (31B) étant disposée sur le trajet du faisceau réfléchi par le cube avec interposition d'une lame quart d'onde (72), un troisième convertisseur (152) étant disposé sur le trajet du faisceau réfléchi par la seconde couche et fournissant un troisième signal électrique,

- des moyens pour effectuer les rapports des second et troisième signaux au premier signal

- des moyens pour obtenir les dérivées desdits rapports

- et des moyens pour fournir un signal lorsque l'une ou l'autre des dérivées est restée comprise, pendant un temps donné, entre deux valeurs encadrant la valeur de consigne représentative de l'épaisseur désirée de la couche correspondante.

5/ Dispositif selon la revendication 4, caractérisé en ce que le hublot (72) traversé par le faisceau réfléchi par le cube (130) est une lame quart d'onde.

FIG. 1

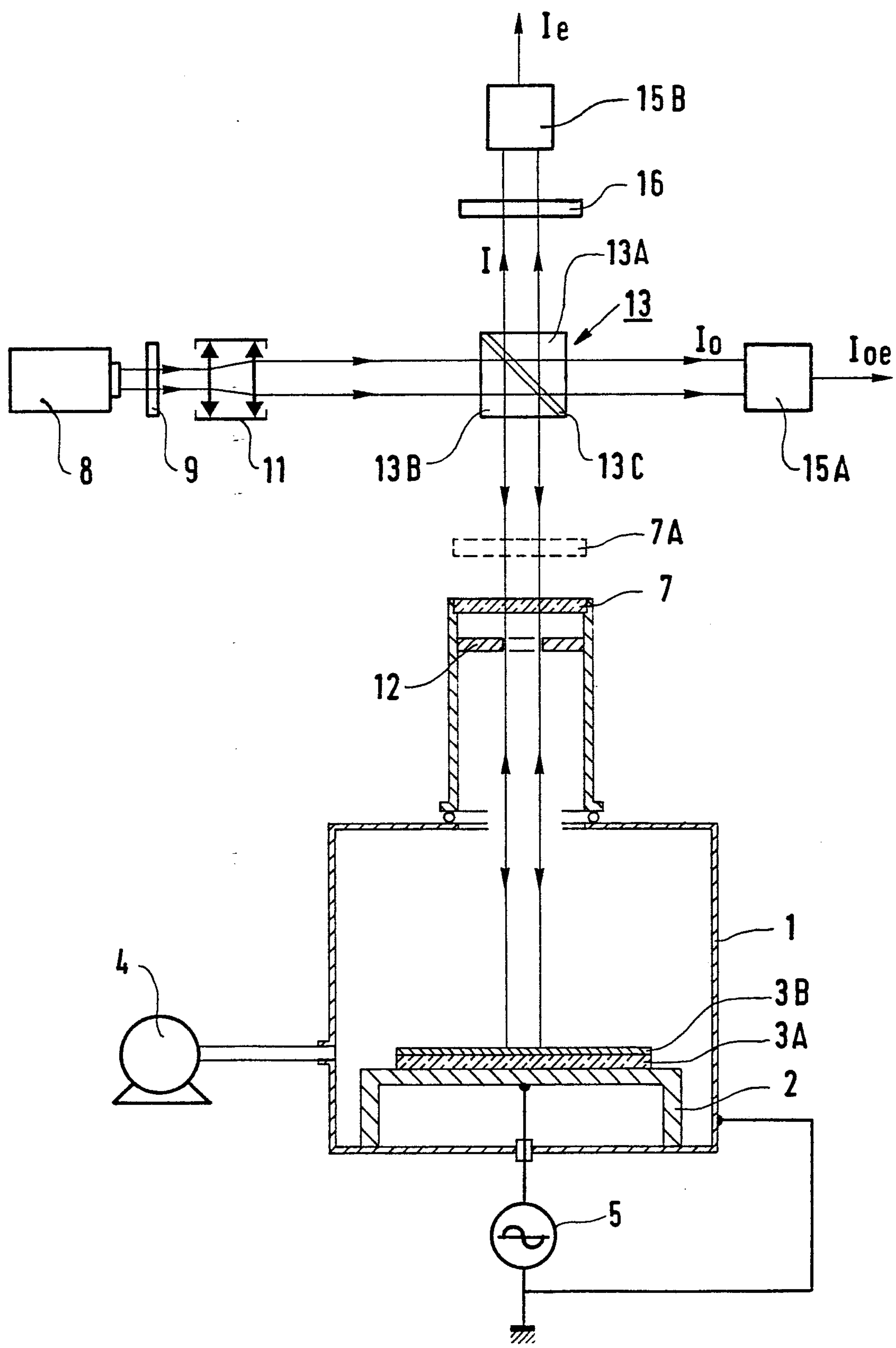

FIG. 2

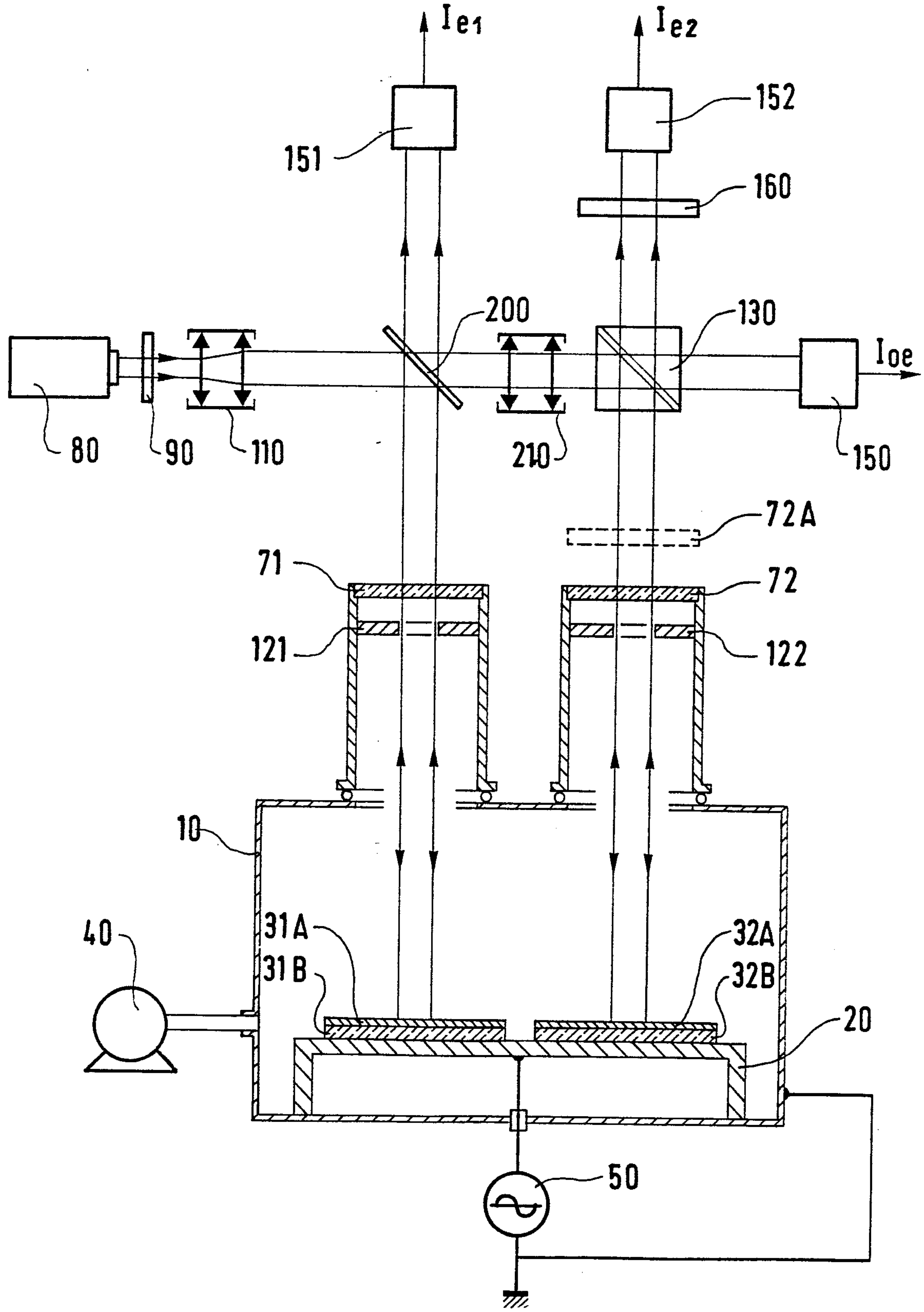
Ie1
Ie2
151
152
160
200
130
Ioe
80
90
110
210
150
72A
71
72
121
122
10
40
31A
31B
32A
32B
20
50